(19) Europäisches Patentamt
European Patent Office
Office européen des brevets

(11) EP 2 219 053 A1

(12) EUROPEAN PATENT APPLICATION

(43) Date of publication:
**18.08.2010 Bulletin 2010/33**

(21) Application number: **10152375.1**

(22) Date of filing: **02.02.2010**

(51) Int Cl.:
***G02B 5/18*** (2006.01) ***G11B 7/258*** (2006.01)
***G11B 7/26*** (2006.01) *C03C 17/38* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.02.2009 JP 2009023622**

(71) Applicant: **FUJIFILM Corporation**
**Minato-ku**
**Tokyo 106-8620 (JP)**

(72) Inventor: **Usami, Yoshihisa**
**Kanagawa (JP)**

(74) Representative: **HOFFMANN EITLE**
**Patent- und Rechtsanwälte**
**Arabellastrasse 4**
**81925 München (DE)**

# (54) Heat-ray reflective film, heat-ray reflective structure, and production method thereof

(57) A heat-ray reflective films, containing: a convex-concave portion formed by arranging a plurality of concave portions in one surface of the heat-ray reflective film using the surface as a base plane; and a conductive layer formed on a surface of the convex-concave portion, wherein each of the concave portions has a depth of less than 1 μm, and the conductive layer has a thickness of 1 μm or less, and wherein the convex-concave portion contains a slanted side wall, and the heat-ray reflective film satisfies the relationship of:

$$(A/B) \times 100 \geq 20\%$$

where A denotes a projected area obtained by vertically projecting the slanted side wall of the convex portion onto a horizontal plane, and B denotes a projected area obtained by vertically projecting the entire concave portion onto a horizontal plane.

EP 2 219 053 A1

## Description

### BACKGROUND OF THE INVENTION

#### Field of the Invention

The present invention relates to a heat-ray reflective film having a high shielding properties of heat-rays and capable of passing electric waves and visible rays through, and also relates to a heat-ray reflective structure and a production method thereof.

#### Description of the Related Art

For improving the efficiency in air conditioning, a thin metal film has been formed on a glass window so as to shield heat rays (infrared rays), to thereby suppress the transmission of heat between the inner and outer environments. For example, there has been a method in which a film deposited with a thin metal film of high heat-ray shielding properties is bonded to a glass window. However, the thin metal film also shields electric waves, and thus signals for cellular phones are difficult to reach, or it may be difficult to receive the signals for television or radio.

To solve this problem, for example, Japanese Patent Application Laid-Open (JP-A) No. 2005-104793 proposes a heat-ray reflective laminate structure, in which a heat-ray reflective film shields the conductivity with the deposition on the convex-concave structure, is sandwiched with a pair of transparent bases so as to intermittently form a metal layer, to thereby reflect light such as heat rays, but transmit electric waves.

However, in this proposal, the convex-concave portion does not have slanted side walls, and the minimum distance (the pitch) between the center points of the adjacent concave portions is large such as 10 μm or more. Therefore, not only that bumps due to the convex-concave portion are visually observed, but also the transmission of the electric waves having high frequency is blocked.

### BRIEF SUMMARY OF THE INVENTION

The present invention aims at providing a heat-ray reflective film having a high shielding properties of heat-rays and capable of transmitting electric waves and visible light, and also a heat-ray reflective structure and a production method thereof.

The means for solving the aforementioned problems are as follow:

<1> A heat-ray reflective film, containing:

a convex-concave portion formed by arranging a plurality of concave portions in one surface of the heat-ray reflective film using the surface as a base plane; and
a conductive layer formed on a surface of the convex-concave portion,
wherein each of the concave portions has a depth of less than 1 μm, and the conductive layer has a thickness of 1 μm or less, and
wherein the convex-concave portion contains a slanted side wall, and the heat-ray reflective film satisfies the relationship of:

$$(A/B) \times 100 \geq 20\%$$

where A denotes a projected area obtained by vertically projecting the slanted side wall of the convex portion onto a horizontal plane, and B denotes a projected area obtained by vertically projecting the entire concave portion onto a horizontal plane.

<2> The heat-ray reflective film according to <1>, wherein a slanted direction of the slanted side wall of the concave portion and an arranging direction of the concave portion makes an angle of 30 degrees or more but less than 90 degrees.

<3> The heat-ray reflective film according to any of <1> or <2>, wherein the adjacent concave portions are arranged so that a minimum distance between center points thereof is less than 10 μm on average.

<4> The heat-ray reflective film according to any one of <1> to <3>. Wherein the conductive layer has a thickness of 0.5 nm to 500 nm.

<5> The heat-ray reflective film according to any one of <1> to <4>, further containing a smoothing layer disposed

above the convex-concave portion with the conductive layer intervening between the smoothing layer and the convex-concave portion.

<6> A heat-ray reflective structure, containing:

a base; and
the heat-ray reflective film as defined in any one of <1> to <5>, disposed on the base.

<7> A method for producing a heat-ray reflective structure, containing:

providing an organic layer, which is capable of changing a shape thereof with heat, on one surface of a base, and applying a condensed light to the organic layer so as to form a convex-concave portion having slanted side walls; and
forming a conductive layer on a surface of the convex-concave portion.

<8> A method for producing a heat-ray reflective structure, containing:

providing an imprint layer on one surface of a base, and pressing an imprint mold against the imprint layer in accordance with an imprinting method so as to form a convex-concave portion having slanted side walls; and
forming a conductive layer on a surface of the convex-concave portion.

<9> The method for producing a heat-ray reflective structure according to <8>, the imprint mold is formed by performing etching using, as a mask, an organic layer in which a convex-concave portion has been formed by applying a condensed light to the organic layer capable of changing a shape thereof with heat.

According to the present invention, the problems in the art can be solved, and there can be provided a heat-ray reflective film having high heat-ray shielding properties, and capable of transmitting electric waves and visible light, and also a heat-ray reflective structure, and the production method thereof.

BRIEF DESCRIPTION OF THE SEVERAL VIEWS OF THE DRAWINGS

FIG. 1 is a schematic cross-sectional diagram showing one example of the heat-ray reflective film of the present invention.
FIG. 2 includes a schematic cross-sectional view of the concave portion and the projected view of the concave portion.
FIG. 3A is a diagram showing one example when a surface of the organic layer is planarly viewed.
FIG. 3B is a diagram showing another example when a surface of the organic layer is planarly viewed.
FIG. 3C is a cross-sectional diagram showing one example of the organic layer in which the concave portions have been formed and the base.
FIGs. 4A to 4C are diagrams showing a step for forming the convex-concave portion by the imprinting method.
FIG. 5A is a schematic diagram showing the convex-concave forming step in the method for producing a heat-ray reflective structure of the present invention.
FIG. 5B is a schematic diagram showing the conductive layer forming step in the method for producing a heat-ray reflective structure of the present invention.
FIG. 5C is a schematic diagram showing the smoothing step in the method for producing a heat-ray reflective structure of the present invention.
FIG. 6 is an electron microgram showing the concave portions formed in the organic layer in Example 1.
FIG. 7 is a projection view obtained by projecting the concave portions formed in the organic layer in Example 1 to a horizontal plane.

DETAILED DESCRIPTION OF THE INVENTION

(Heat-ray Reflective Film)

The heat-ray reflective film of the present invention contains a convex-concave portion, and a conductive layer disposed on a surface of the convex-concave portion, and optionally further contains other layers.

<Convex-Concave Portion>

The convex-concave portion is formed by arranging a plurality of concaves in one surface of the heat-ray reflective film using this surface as a base plane.

Here, as shown in FIG. 1, a plurality of the convexes 11 and a plurality of the concaves 10 are formed at a constant pitch (the shortest distance between a center of the concave and a center of the adjacent concave) in one surface 20 of the heat-ray reflective film 21. In this case, a group of convexes 11 and concaves 10 is together called a convex-concave portion 22.

The cross-sectional shape of the convex-concave portion may be of straight line, or of carve.

The depth of the concave portion (the height of the convex portion) is less than 1 μm, preferably 10 nm to 900 nm, more preferably 50 nm to 800 nm. When the depth of the concave portion is more than 1 μm, at the time of forming the convex-concave portion by transferring a convex-concave shape, it may be difficult to release from the master, or the shape of the resulted convex-concave portion may be deformed. When the concave portion is too shallow, the conductive layer is conductive and thus the effect for transmitting the electric waves may not be easily attained.

The depth of the concave portion can be measured, for example, by an atomic force microscope (AFM).

As shown in FIG. 1, the convex-concave portion 22 has inclined side walls (slanted side walls), the slanted angle θ formed between the slanted direction of the slanted side wall of the concave portion and the arranged direction of the concave portions (convex portions) is 30 degrees or more but less than 90 degrees, preferable 40 degrees to 80 degrees. When the slanted angle θ is less than 30 degrees, the conductive layer is conducted and thus the effect for transmitting electric waves may not be easily attained. When the slanted angle θ is more than 90 degrees, at the time of forming the convex-concave portion by transferring a convex-concave shape, it may be difficult to release from the master, or the shape of the resulted convex-concave portion may be deformed.

The slanted angle θ of the slanted wall of the concave portion can be measured, for example, by cutting a sample, and observing the cross-section of the cut sample under a scanning electron microscope (SEM), or by an atomic force microscope (AFM).

In the present invention, as well as the convex-concave portion having slanted side walls, the ratio of the projected area obtained by vertically projecting the slanted side wall of the concave portion to a horizontal plane, to the projected area obtained by vertically projecting the entire concave portion to a horizontal plane is constant.

Here, the upper part of FIG. 2 is a schematic cross-sectional view of the concave portion 10, the bottom part of FIG. 2 is a vertical projection view of the concave portion 10 to a horizontal plane. The projected area A obtained by vertically projecting the slanted side wall of the concave portion 10 to a horizontal plane is the shaded area surrounded by the outer circle and the inner circle in the bottom part of FIG. 2. The projected area B obtained by vertically projecting the entire concave portion to a horizontal plane is the area of the entire outer circle.

The projected area A obtained by vertically projecting the slanted side wall of the concave portion to a horizontal plane and the projected area B obtained by vertically projecting the entire concave portion to a horizontal plane satisfy the following formula: $(A/B) \times 100 \geq 20\%$, preferably satisfy the following formula: $(A/B) \times 100 \geq 30\%$. When the value of $(A/B) \times 100$ is less than 20%, the conductive layer is conducted and thus the effect for transmitting electric waves may not be easily attained.

The minimum distance (the pitch) between the center points of the adjacent concave portions in the convex-concave portion is corresponded to P in FIG. 1, preferably less than 10 μm on average, more preferably 0.1 μm to 9 μm, yet more preferably 1 μm to 7 μm. When the pitch is more than 10 μm, the convex-concave pattern may visually stand out.

The pitch can be measured, for example, by an atomic force microscope (AFM), a scanning electron microscope (SEM), or the like.

<Conductive Layer>

The conductive layer is formed of a conductive material, and a structure thereof is suitably selected. The structure of the conductive layer may be a single layer structure, or a laminate structure.

The conductive layer is formed on a surface of the convex-concave portion, and is generally formed on the bottom surface of the concave portion and on the top surface of the convex portion. It is preferred that no conductive layer or a slight portion of the conductive layer be formed on the slanted side wall of the convex-concave portion. As a result of such the structure, the conductive layer is divided, to thereby increase the transmissivity of electric waves.

The conductive material is suitably selected depending on the intended purpose without any restriction, provided that it has conductivity. Examples thereof include various metals such as Ni, Cu, Al, Mo, Co, Cr, Ta, Pd, Pt, and Au, or alloys thereof, and oxides such as tin-doped indium oxide, antimony-doped thin oxide, and ZnO.

The method for forming the conductive layer is suitably selected depending on the intended purpose without any restriction. Examples thereof include vacuum deposition, sputtering, CVD, plating, deposition in a solution, and

spraying. Among them, vacuum deposition, low-pressure sputtering, and spraying are preferable, and the vacuum deposition is more preferable.

The thickness of the conductive layer is 1 μm or less, preferably 0.5 nm to 500 nm, more preferably 5 nm to 500 nm, yet more preferably 10 nm to 100 nm. When the thickness of the conductive layer is more than 1 μm, the conductive layer hardly pass through light.

Note that, the thickness of the conductive layer is a thickness of the conductive layer present on the bottom plane of the concave, or the top plane of the convex, not the that of the conductive layer present on the slanted side wall of the convex-concave portion.

The thickness of the conductive layer can be measured, for example, by cutting a sample, and observing the cut surface under a scanning electron microscope (SEM).

-Smoothing Lawyer-

The smoothing layer is disposed on the convex-concave portion (in the case where the conductive layer is disposed on the convex-concave portion, on the conductive layer), and is a layer for protecting the conductive layer and smoothing the surface.

If the object herein is for protecting the conductive layer, there is, for example, a method in which the conductive layer is left to stand in the air so as to oxidize a surface of the conductive layer, without providing the smoothing layer. However, it is preferred that the smoothing layer be formed on the convex-concave portion by applying a composition for a smoothing layer onto the convex-concave portion for the purpose of providing the film with further strength.

The composition for the smoothing layer contains a resin component such as an ultraviolet-curing resin, a thermosetting resin, and a thermoplastic resin, and a solvent, and optionally further contains other substances.

The thermosetting resin means a resin which is polymerized by heat to form a lattice structure of polymer, to thereby be solidified without reversing back to the original state. When the thermosetting resin is used, the resin of relatively low molecular weight enough to have fluidity is formed into the predetermined shape, and then is allowed to react by heating or the like to thereby be solidified. Moreover, there is a type of the resin that is an adhesive or putty, and is used by mixing A liquid (a base agent) and B liquid (a curing agent). For example, in the case of an epoxy resin, a polymerization reaction is induced by mixing. Examples of the thermosetting resin include a phenol resin, an epoxy resin, a melamine resin, a urea resin, an unsaturated polyester resin, an alkyd resin, polyurethane, and thermosetting polyimide.

The thermoplastic resin is a resin which is softened by heating the same at the glass transition temperature thereof or the softening temperature thereof, and can be formed into the predetermined shape. Examples thereof include general plastics, engineering plastics, super-engineering plastics, and fiber-reinforced plastics.

Examples of the general plastics include polyethylene (PE), high-density polyethylene (HDPE), medium-density polyethylene (MDPE), low-density polyethylene (LDPE), polypropylene (PP), polyvinyl chloride (PVC), polyvinylidene chloride, polystyrene (PS), polyvinyl acetate (PVAc), Teflon (registered trade mark)(polytetrafluoroethylene: PTFE), an ABS resin (acrylonitrile butadiene styrene resin), an AS resin, and an acryl resin (PMMA).

Examples of the engineered plastics include polyamide (PA), nylon, polyacetal (polyoxymethylene: POM), polycarbonate (PC), modified polyphenylene ether (m-PPE, modified-PPE, PPO), polybutylene terephthalate (PBT), polyethylene terephthalate (PET), glass fiber-reinforced polyethylene terephthalate (GF-PET), and cyclo-olefin polymer (COP).

Examples of the super engineered plastics include polyphenylene sulfide (PPS), polysulfone (PSF), polyethersulfone (PES), amorphous polyacrylate (polyacrylate rubber: PAR), liquid crystal polymer (LCP), polyether ether ketone (PEEK), thermoplastic polyimide (PI), and polyamide imide (PAI).

Examples of the fiber-reinforced plastics include glass fiber-reinforced plastic (GFRP), and carbon fiber-reinforced plastic (CFRP).

The coating method is suitably selected depending on the intended purpose without any restriction. Examples thereof include web coating, and spin coating.

The heat-ray reflective film of the present invention has high heat-ray shielding properties, but transmits electric waves and visible rays. Therefore, the heat-ray of the present invention can be bonded to a glass window as it is, or can be disposed as an intermediate film, which is sandwiched with a pair of glass plates, in a laminated glass. However, the heat-ray reflective film of the present invention is particularly preferably used in a heat-ray reflective structure, which will be explained hereinafter.

(Heat-ray Reflective Structure)

The heat-ray reflective structure of the present invention contains a base, and the heat-ray reflective film of the present invention disposed on the base, and optionally further contains other members.

-Base-

The base is suitably selected depending on the intended purpose without any restriction in terms of the material, shape, structure, size, and the like thereof. The material of the base is for example, a metal, an inorganic material, or an organic material. The shape thereof is, for example, a shape of a plate. The structure thereof may be a single layer structure, or a laminate structure. The size thereof can be suitably selected depending on the intended use and the like.
Examples of the metal include transition metals. Examples of the transition metals include various metals such as Ni, Cu, Al, Mo, Co, Cr, Ta, Pd, Pt, and Au, and alloys thereof.
Examples of the inorganic material include glass, silicon (Si), and quartz ($SiO_2$).
Examples of the organic material include resins. Examples of the resins include polyethylene terephthalate (PET), polyethylene naphthalate (PEN), polycarbonate (PC), a low-melting point fluororesin, polymethyl methacrylate (PMMA), and triacetate cellulose (TAC). Among them, PET, PC, and TAC are particularly preferable.

-Use-

The heat-ray reflective structure of the present invention can be widely used in various fields, such as window glass for various vehicles including automobiles, buses, tracks, trains, bullet trains, air crafts, passenger air crafts, and ships, and glass for construction materials such as openings and partitions of buildings including general detached houses, complex houses, office buildings, commercial buildings such as of shops, public buildings, and plants.

(Method For Producing Heat-ray Reflective Structure)

The method for producing a heat-ray reflective structure of the present invention contains a convex-concave portion forming step, and a conductive layer forming step, and optionally further contains a smoothing step and other steps.

<Convex-Concave Portion Forming Step>

The convex-concave portion may be the one originally having the convex-concave portion, such as a base formed of silicate soil. However, it is preferred that a convex-concave portion is intentionally formed by the method such as photolithography and imprinting.
For the formation of the convex-concave portion, the convex-concave portion may be formed by sand-bursting the base itself, but the following first and second embodiments for forming the convex-concave portion, in which a layer capable of forming a convex-concave portion (an organic layer, an imprint layer) is provided on the base, is taken away, are preferable.
In the first embodiment, the convex-concave portion forming step is providing an organic layer, which is capable of changing a shape thereof with heat, on a surface of a base, and applying condensed light to the organic layer so as to form a convex-concave portion having slanted side walls.
In the second embodiment, the convex-concave portion forming step is providing an imprint layer on a surface of a base, and pressing an imprint mold against the imprint layer in accordance with an imprinting method, so as to form a convex-concave portion having slanted side walls.

--Convex-Concave Portion Forming Method in First Embodiment--

The organic layer capable of changing a shape thereof with heat is a layer capable of forming concave portions, in which the material thereof changes the shape thereof with heat converted from the strong light which has been applied to the layer. As the material for the organic layer, a cyanine-based compound, a phthalocyanine-based compound, a quinone-based compound, a squarylium-based compound, an azlenium-based compound, a thiol complex salt-based compound, a merocyanine-based compound or the like may be used, for example.
Preferred examples thereof include methine colorants (cyanine colorants, hemicyanine colorants, styryl colorants, oxonol colorants, merocyanine colorants, etc.), macrocyclic colorants (phthalocyanine colorants, naphthalocyanine colorants, porphyrin colorants, etc.), azo colorants (including azo metal chelate colorants), allylidene colorants, complex colorants, coumarin colorants, azole derivatives, triazine derivatives, 1-aminobutadiene derivatives, cinnamic acid derivatives and quinophthalone-based colorants. Among these, methine colorants and azo colorants are particularly preferable.
Regarding the organic layer, a colorant used therefor may be suitably selected according to the wavelength of a laser light source, and the structure thereof may be modified.
For example, when the oscillation wavelength of the laser light source is in the vicinity of 780 nm, selection of a colorant from pentamethine cyanine colorant, heptamethine oxonol colorant, pentamethine oxonol colorant, phthalocyanine colorant, naphthalocyanine colorant and the like is advantageous.

When the oscillation wavelength of the laser light source is in the vicinity of 660 nm, selection of a colorant from trimethine cyanine colorant, pentamethine oxonol colorant, azo colorant, azo metal complex colorant, pyrromethene complex colorant and the like is advantageous.

When the oscillation wavelength of the laser light source is in the vicinity of 405 nm, selection of a colorant from monomethine cyanine colorant, monomethine oxonol colorant, zeromethine merocyanine colorant, phthalocyanine colorant, azo colorant, azo metal complex colorant, porphyrin colorant, allylidene colorant, complex colorant, coumarin colorant, azole derivative, triazine derivative, benzotriazole derivative, 1-aminobutadiene derivative, quinophthalone-based colorant and the like is advantageous.

Preferred examples of compounds suitable for the organic layer, when the oscillation wavelength of the laser light source is in the vicinity of 405 nm, will be mentioned below. The compounds represented by Structural Formulae III-1 to III-14 below are preferred examples when the oscillation wavelength of the laser light source is in the vicinity of 405 nm. Meanwhile, preferred examples of compounds suitable for the organic layer, when the oscillation wavelength of the laser light source is in the vicinity of 780 nm or 660 nm, include the compounds mentioned in the paragraphs [0024] to [0028] of JP-A No. 2008-252056. In the present invention, use of any of these compounds is not compulsory.

< Examples of Compounds when Oscillation Wavelength of Laser Light Source is in the vicinity of 405 nm>

(III-1)

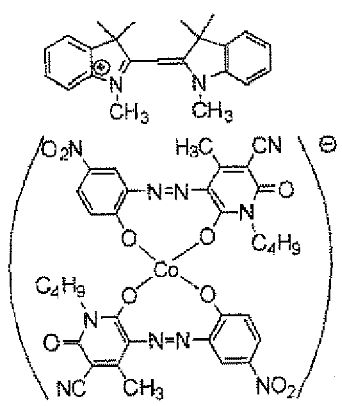

(III-2)

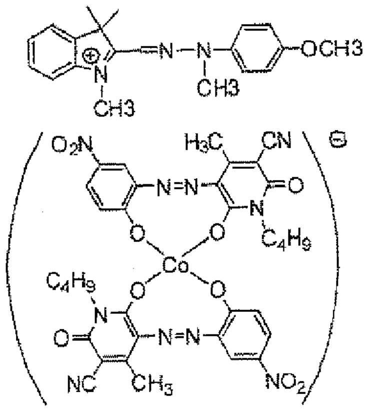

(III-3)

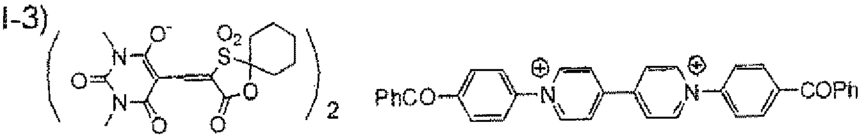

(III-4)

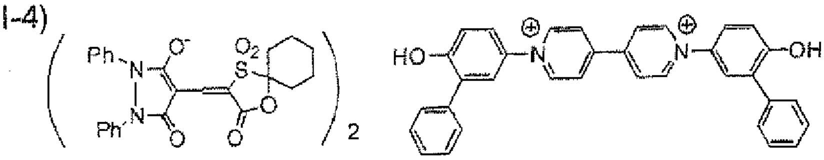

(III-5)

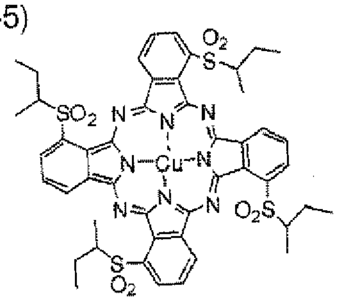

(III-6)

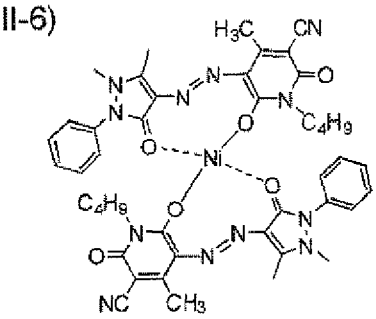

<Examples of Compounds when Oscillation Wavelength of Laser Light Source is in the vicinity of 405 nm>

(III-7)

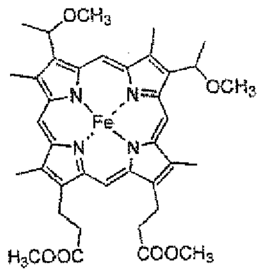

(III-8)

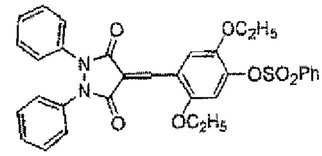

(III-9)

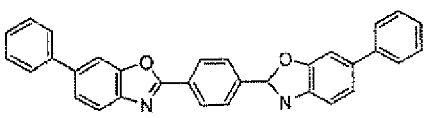

(III-10)

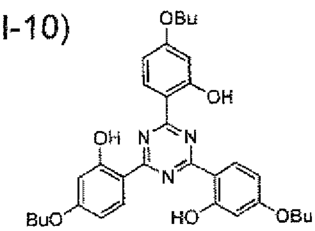

(III-11)

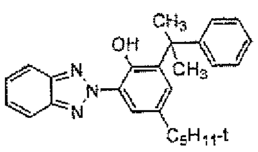

(III-12)

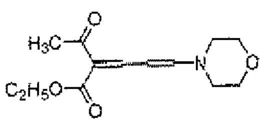

(III-13)

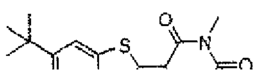

(III-14)

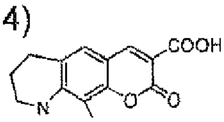

Also, the colorants mentioned in JP-A Nos. 04-74690, 08-127174, 11-53758, 11-334204, 11-334205, 11-334206, 11-334207, 2000-43423, 2000-108513 and 2000-158818, etc. can be suitably used.

A coating solution for such a colorant-containing organic layer is prepared by dissolving a colorant in a solvent along with a bonding agent, etc. The organic layer can be formed by applying this coating solution onto the base so as to form a coating film and then drying it. At that time, the temperature of the surface of the base onto which the coating solution is applied is preferably in the range of 10°C to 40°C. The lower limit value of the temperature is preferably 15°C

or higher, more preferably 20°C or higher, particularly preferably 23°C or higher. The upper limit value of the temperature is preferably 35°C or lower, more preferably 30°C or lower, particularly preferably 27°C or lower. When the temperature of the surface is in the above-mentioned range, it is possible to prevent the occurrence of uneven application of the coating solution or application trouble and make the coating film have a uniform thickness. Note that the upper limit value and the lower limit value may be arbitrarily and independently set.

Here, the organic layer may have a single-layer structure or a multilayer structure; in the case where it has a multilayer structure, it is formed by carrying out a coating process a plurality of times.

As for the concentration of the colorant in the coating solution, it is desirable that the colorant be dissolved in the solvent so as to occupy 0.3% by mass to 30% by mass, more desirably 1% by mass to 20% by mass, of the solvent. It is particularly desirable that the colorant be dissolved in tetrafluoropropanol so as to occupy 1% by mass to 20% by mass of the tetrafluoropropanol.

The solvent of the coating solution is not particularly limited and may be suitably selected according to the purpose. Examples thereof include esters such as butyl acetate, ethyl lactate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methyl cyclohexane; ethers such as tetrahydrofuran, ethyl ether and dioxane; alcohols such as ethanol, n-propanol, isopropanol and n-butanol diacetone alcohol; fluorine-based solvents such as 2,2,3,3-tetrafluoro-1-propanol; and glycol ethers such as ethylene glycol monomethyl ether, ethylene glycol monoethyl ether and propylene glycol monomethyl ether. Among these, butyl acetate, ethyl lactate, cellosolve acetate, methyl ethyl ketone, isopropanol and 2,2,3,3-tetrafluoro-1-propanol are particularly preferable.

These solvents may be used individually or in combination in view of the solubility of the colorant used. Further, additive(s) such as an antioxidant, an UV absorber, a plasticizer, a lubricant, etc. may be added into the coating solution according to the purpose.

The method for the application of the coating solution is not particularly limited and may be suitably selected according to the purpose. Examples thereof include spraying, spin coating, dipping, roll coating, blade coating, doctor roll method, doctor blade method and screen printing. Among these, employment of spin coating is preferable in terms of productivity and facilitation of control of the film thickness.

It is desirable that the colorant be dissolved in the solvent so as to occupy 0.3% by mass to 30% by mass, more desirably 1% by mass to 20% by mass, of the solvent because, if so, the organic layer can be advantageously formed by spin coating.

The pyrolysis temperature of the colorant is preferably 150°C to 500°C, more preferably 200°C to 400°C.

The temperature of the coating solution when applied is preferably 23°C to 50°C, more preferably 24°C to 40°C, yet more preferably 25°C to 30°C.

In the case where the coating solution contains a bonding agent, the bonding agent is not particularly limited and may be suitably selected according to the purpose. Examples thereof include natural organic polymeric substances such as gelatin, cellulose derivatives, dextran, rosin and rubber; hydrocarbon-based resins such as polyethylene, polypropylene, polystyrene and polyisobutylene; vinyl-based resins such as polyvinyl chloride, polyvinylidene chloride and polyvinyl chloride-polyvinyl acetate copolymer; acrylic resins such as polymethyl acrylate and polymethyl methacrylate; synthetic organic polymers, for example initial condensates of thermosetting resins such as polyvinyl alcohol, chlorinated polyethylene, epoxy resins, butyral reins, rubber derivatives and phenol-formaldehyde resins.

As for the amount of the bonding agent when used as a material for the organic layer, it is generally desirable that the mass of the bonding agent be 0.01 times to 50 times the mass of the colorant, and more desirable that the mass of the bonding agent be 0.1 times to 5 times the mass of the colorant.

A discoloration preventing agent selected from a variety of discoloration preventing agents may be contained in the organic layer to improve the light resistance of the organic layer.

As the discoloration preventing agent, a singlet oxygen quencher is generally used. The singlet oxygen quencher may be selected from quenchers mentioned in already known publications such as patent specifications.

Specific examples thereof include those mentioned in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 04-25492, Japanese Patent Application Publication (JP-B) Nos. 01-38680 and 06-26028, German Patent No. 350399, and p. 1141 of the October, 1992 issue of Journal of the Chemical Society of Japan.

The amount of the discoloration preventing agent such as a singlet oxygen quencher is preferably 0.1% by mass to 50% by mass, more preferably 0.5% by mass to 45% by mass, yet more preferably 3% by mass to 40% by mass, particularly preferably 5% by mass to 25% by mass, with respect to the amount of the colorant.

Although the foregoing has described a solvent applying method for formation of the organic layer, it should be noted that the organic layer can also be formed by a deposition method such as vacuum deposition, sputtering or CVD.

A colorant which is higher in absorptance at the wavelength of laser light used in the after-mentioned formation of concave portions than at any other wavelength is used as the colorant.

The absorption peak wavelength of the colorant is not necessarily in the wavelength region of visible light but may be in the ultraviolet or infrared wavelength region.

The absorption peak wavelength of the colorant $\lambda a$ and the wavelength $\lambda w$ of laser light for forming concave portions preferably satisfy the relationship: $\lambda a<\lambda w$. If this relationship is satisfied, the amount of light absorbed by the colorant is appropriate, thereby enhancing recording efficiency, and an exquisite convex-concave shape may be able to be formed. Also, the relationship $\lambda w<\lambda c$ is preferably satisfied. This is because $\lambda w$ should be the wavelength at which the colorant absorbs light, so that when the central wavelength $\lambda c$ of light emitted by a light emitting device is longer than the wavelength $\lambda w$, the light emitted by the light emitting device is not absorbed into the colorant and thus there is an increase in transmittance, thereby improving luminous efficacy.

From the foregoing viewpoint, the relationship $\lambda a<\lambda w<\lambda c$ will be most desirable.

The wavelength $\lambda w$ of the laser light for forming the concave portions should be such a wavelength as makes it possible to obtain great laser power; for example, in the case where a colorant is used in the organic layer, the wavelength $\lambda w$ is preferably 1,000 nm or less, e.g. 193 nm, 210 nm, 266 nm, 365 nm, 405 nm, 488 nm, 532 nm, 633 nm, 650 nm, 680 nm, 780 nm or 830 nm.

As for the type of the laser light, the laser light may be any of a gas laser, a solid-state laser, a semiconductor laser and the like. It should, however, be noted that employment of a solid-state laser or a semiconductor laser is preferable in view of simplification of an optical system. The laser light may be continuous light or pulsed light, and it is preferable to employ laser light with freely alterable luminous intervals. For example, it is preferable to employ a semiconductor laser. In the case where the laser cannot be directly subjected to on-off modulation, it is preferable to modulate the laser using an external modulation device.

The laser power is preferably high in view of increasing the processing speed. It should, however, be noted that as the laser power is increased, the scanning speed (speed at which the organic layer is scanned with the laser light) has to be increased as well. Therefore, in view of the upper limit value of the scanning speed, the upper limit value of the laser power is preferably 100 W, more preferably 10 W, yet more preferably 5 W, particularly preferably 1 W. The lower limit value of the laser power is preferably 0.1 mW, more preferably 0.5 mW, yet more preferably 1 mW.

Further, it is desirable that the laser light be superior in oscillation wavelength width and coherency and can be focused to a spot size equivalent to its wavelength. As for light pulse irradiation conditions for appropriately forming the concave portions, it is desirable to employ such a strategy as used for optical disks. Specifically, it is desirable to employ such conditions in relation to the recording speed and the crest value and pulse width of applied laser light as used for optical disks.

It is desirable that the thickness of the organic layer correspond to the depth of the after-mentioned concave portions 15.

The thickness of the organic layer can, for example, be set in the range of 1 nm to 10,000 nm. The lower limit value of the thickness is preferably 10 nm or more, more preferably 30 nm or more. When the organic layer is too thin, concave portions 15 which are shallow are formed, so that optical effects may not be obtained. The upper limit value of the thickness is preferably 1,000 nm or less, more preferably 500 nm or less. When the organic layer is too thick, great laser power is required, formation of deep holes may be difficult, and further, the processing speed may decrease.

Also, the thickness t of the organic layer and the diameter d of a concave portion preferably satisfy the following relationship.

Regarding the upper limit value of the thickness t of the organic layer, the relationship $t<10d$ is preferably satisfied, more preferably $t<5d$, yet more preferably $t<3d$. Regarding the lower limit value of the thickness t of the organic layer, the relationship $t>d/100$ is preferably satisfied, more preferably $t>d/10$, yet more preferably $t>d/5$. The reasons why the upper and lower limit values of the thickness t of the organic layer are set in relation to the diameter d of the concave portion are similar to the above-mentioned reasons.

At the time of formation of the organic layer, the organic layer can be formed by dissolving or dispersing a colorant in a certain solvent so as to prepare a coating solution, and then applying this coating solution onto the surface of the base by a coating method such as spin coating, dip coating or extrusion coating.

A plurality of concave portions are periodically formed in the organic layer. These concave portions are formed by irradiating the organic layer with condensed light so as to deform the irradiated portions (which includes deformation by loss).

The principle of the formation of the concave portions is as follows.

When the organic layer is irradiated with laser light having a wavelength at which a material absorbs light (laser light having such a wavelength as to be absorbed by the material), the laser light is absorbed by the organic layer, this absorbed light is converted to heat, and the irradiated portions increase in temperature. Thus, the organic layer undergoes chemical and/or physical change(s) such as softening, liquefaction, vaporization, sublimation, decomposition, etc. As the material having undergone such change(s) moves and/or disappears, concave portions are formed.

For the formation of the concave portions, a pit forming method known in relation to write-once optical disks, recordable optical disks, etc. may be used, for example. Specifically, a known technique for running OPC may, for

example, be used which involves detecting the intensity of reflected laser light, which changes according to the pit size, correcting the output of the laser light such that the intensity of the reflected laser light becomes constant, and thusly forming uniform pits (refer to Japanese Patent (JP-B) No. 3096239).

The above-mentioned vaporization, sublimation or decomposition of the organic layer preferably takes place at a great change rate and precipitously. Specifically, the mass reduction rate at the time of the vaporization, sublimation or decomposition of the colorant, measured using a differential thermal balance (TG-DTA), is preferably 5% or more, more preferably 10% or more, yet more preferably 20% or more. Also, the slope of the mass reduction (i.e. the mass reduction rate with respect to an increase in temperature by 1°C) at the time of the vaporization, sublimation or decomposition of the colorant, measured using a differential thermal balance (TG-DTA), is preferably 0.1%/°C or more, more preferably 0.2%/°C or more, yet more preferably 0.4%/°C or more.

The upper limit value of the transition temperature in relation to the chemical and/or physical change(s) such as softening, liquefaction, vaporization, sublimation, decomposition, etc. is preferably 2,000°C or lower, more preferably 1,000°C or lower, yet more preferably 500°C or lower. When the transition temperature is too high, great laser power may be required. The lower limit value of the transition temperature is preferably 50°C or higher, more preferably 100°C or higher, yet more preferably 150°C or higher. When the transition temperature is too low, the temperature gradient between the target portions and surrounding portions is low, so that the shape of hole edges may not be clear.

FIG. 3A is a drawing showing an example of an organic layer as seen in a planar view, FIG. 3B is a drawing showing another example of an organic layer as seen in a planar view, and FIG. 3C is a cross-sectional view showing a base and an organic layer. As shown in FIG. 3A, concave portions 15 formed in the shape of dots which are arranged in the form of a lattice may be employed. Meanwhile, as shown in FIG. 3B, concave portions 15 may be formed as long thin grooves which extend with spaces in between. Further, although not shown, concave portions 15 may be formed as continuous grooves.

The pitch P of the concave portions 15 is 0.01 times to 100 times the central wavelength $\lambda c$ of light emitted by an LED device 10 as a luminous member.

The pitch P of the concave portions 15 is preferably 0.05 times to 20 times, more preferably 0.1 times to 5 times, yet more preferably 0.5 times to 2 times, the central wavelength $\lambda c$. Specifically, the lower limit value of the pitch P is preferably 0.01 times or more, more preferably 0.05 times or more, yet more preferably 0.1 times or more, particularly preferably 0.2 times or more, the central wavelength $\lambda c$. The upper limit value of the pitch P is preferably 100 times or less, more preferably 50 times or less, yet more preferably 10 times or less, particularly preferably 5 times or less, the central wavelength $\lambda c$.

The diameter or groove width of each concave portion 15 is preferably 0.005 times to 25 times, more preferably 0.025 times to 10 times, yet more preferably 0.05 times to 2.5 times, particularly preferably 0.25 times to 2 times, the central wavelength $\lambda c$.

The diameter or groove width herein mentioned is the diameter or width of each concave portion 15 measured at the midpoint of the depth of the concave portion 15, in other words the half-value width.

The diameter or groove width of each concave portion 15 may be suitably set in the above-mentioned range; it is preferable to set the diameter or groove width according to the pitch P such that the refractive index gradually decreases in a macroscopic manner in proportion to the distance from the emitting surface 18. Specifically, when the pitch P is large, it is preferable to make the diameter or groove width of the concave portion 15 large as well; whereas when the pitch P is small, it is preferable to make the diameter or groove width of the concave portion 15 small as well. From the foregoing viewpoint, it is desirable that the diameter or groove width be approximately half the pitch P, preferably 20% to 80%, more preferably 30% to 70%, yet more preferably 40% to 60%, of the pitch P.

The depth of each concave portion 15 is preferably 0.01 times to 20 times, more preferably 0.05 times to 10 times, yet more preferably 0.1 times to 5 times, particularly preferably 0.2 times to 2 times, the central wavelength $\lambda c$.

-- Convex-Concave Portion Forming Method in Second Embodiment --

As the imprinting method, a thermal nanoimprinting method or optical nanoimprinting method may be employed.

In the nanoimprinting method, a plurality of convex portions of an imprint mold are pressed against an imprint layer formed on the surface of a base. Here, the temperature of the system is kept in the vicinity of the glass transition temperature (Tg) of the imprint layer, and the temperature of the imprint layer becomes lower than the glass transition temperature of a thermoplastic resin contained in the imprint layer after the transfer of the pattern, thereby curing the thermoplastic resin. When the imprint mold is separated from the imprint layer, a convex-concave pattern is formed at the imprint layer.

In the optical nanoimprinting method, a resist convex-concave pattern is formed using an imprint mold which transmits light and which is made of a material (for example, quartz ($SiO_2$), an organic resin (PET, PEN, polycarbonate, low-melting-point fluorine resin, etc.) or the like) having such strength as can function as an imprint mold.

Subsequently, an imprint layer formed of an imprint composition containing at least a photocurable resin is

irradiated with an ultraviolet ray or the like so as to harden the pattern transferred thereto. Here, note that the pattern may be hardened by ultraviolet irradiation after the mold is released from a base with the imprint layer, which follows the patterning.

The imprint mold is preferably the one which is formed by performing etching using, as a mask, an organic layer in which the convex-concave portion has been formed by applying the condensed light to the organic layer capable of changing the shape thereof with heat, for the purpose of forming the convex-concave portion having slanted side walls.

FIGs. 4A to 4C are process drawings together showing a method of forming a convex-concave pattern by imprinting.

As shown in FIG. 4A, an imprint mold 1 with a convex-concave pattern formed on its surface is pressed against an imprint layer 24 formed on a base 40, which is made of aluminum, glass, silicon or quartz, by applying an imprint resist solution containing polymethyl methacrylate (PMMA) or the like onto the base 40.

Next, as shown in FIG. 4B, when the imprint mold 1 is being pressed against the imprint layer 24, the temperature of the system is kept in the vicinity of the glass transition temperature (Tg) of the imprint resist solution, and the temperature of the imprint layer 24 becomes lower than the glass transition temperature of the imprint resist solution after the transfer of the pattern, thereby curing the imprint resist solution. If necessary, the imprint resist solution may be cured by heating or UV irradiation. Thus, the convex-concave pattern formed on the imprint mold 1 is transferred to the imprint layer 24.

Subsequently, as shown in FIG. 4C, when the imprint mold 1 is separated from the imprint layer 24, a convex-concave pattern having slanted side walls is formed at the imprint layer 24.

<Conductive Layer Forming Step>

The conductive layer forming step is forming a conductive layer on a surface of the convex-concave portion.

The method for forming the conductive layer is suitably selected depending on the intended purpose without any restriction. Examples thereof include vacuum deposition, sputtering, CVD, plating, deposition in a solution, and spraying. Among them, the vacuum deposition, low-pressure sputtering, and spraying are preferable, and the vacuum deposition is particularly preferable.

Examples of the vacuum deposition include electron-beam evaporation, and ion plating.

Examples of the sputtering preferably include a low pressure deposition. The pressure of the deposition surface is preferably 0.1 Pa or less, more preferably 0.01 Pa or less, yet more preferably 0.001 Pa or less. The low-pressure deposition can be realized by decreasing the pressure of a deposition surface area only or by a method such as ion beam sputtering.

In the case of high-pressure deposition, preferred methods include a method of increasing the pressure at the time of deposition and selectively depositing fine particles on convex portions. The pressure of the deposition surface is preferably 0.5 Pa or more, more preferably 5 Pa or more.

The vacuum deposition is preferably carried out in the manner such that the side of the base, where the convex-concave portion has been formed at the surface is directed to the direction for the vacuum deposition, and the vacuum deposition is performed in the vertical direction to the base. In this way, a conductive layer having a thickness of 1 $\mu$m or less can be efficiently formed on the surface of the convex-concave portion (particularly, the bottom plane and top plane of the concave portion in the convex-concave portion).

-Smoothing Step-

The smoothing step is forming a smoothing layer on the convex-concave portion (in the case where the conductive layer is provided, on the conductive layer).

The smoothing layer can be formed by applying a composition for a smoothing layer by web-coating, or spin-coating.

Here, one example of the method for producing the heat-ray reflective structure of the present invention will be explained with reference to FIGs. 5A to 5C.

FIG. 5A is a diagram showing the convex-concave forming step for forming a convex-concave portion having slanted side walls in one surface of a base. The method for forming the convex-concave portion is suitably selected without any restriction. Examples thereof include a method for forming a convex-concave portion by applying condensed light to an organic layer capable of forming a shape thereof with heat, and a nanoimprinting method.

FIG. 5B is a diagram showing the conductive layer forming step for forming a conductive layer on a surface of the convex-concave portion. The conductive layer can be formed on the surface of the convex-concave portion by directing the side of the base where the convex-concave portion has been formed to the vacuum deposition device 4, and performing vacuum deposition in the vertical direction to the base.

FIG. 5C is a diagram showing the smoothing step for forming a smoothing layer on the convex-concave portion.

According to the method for producing a heat-ray reflective structure of the present invention, the heat-ray

reflective structure of the present invention can be efficiently produced.

Examples

Hereinafter, examples of the present invention will be explained, but these examples shall not be construed as limiting the scope of the present invention.

(Example 1)

A glass substrate in the size of 50 mm × 50 mm × 0.5 mm was used. Onto the glass substrate, a solution prepared by dissolving 45 mg of an oxonol organic material expressed by the following structural formula in 1 mL of 2,2,3,3-tetrafluoro-1-propanol was applied by means of a spin coater at the revolution number of 300 rpm, followed by at the revolution number of 1,000 rpm, then dried to thereby form an organic layer having a thickness of 220 nm.

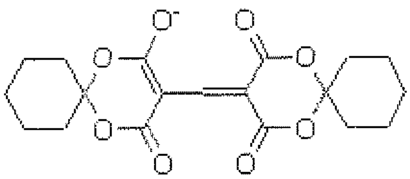

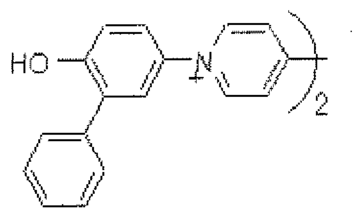

Next, laser light was applied to the organic layer on the substrate by means of NEO1000 (manufactured by Pulstec Industrial Co., Lyd.) at the conditions of 5 m/s and 15 mW, and at the pitch of 1 μm in both circumferential direction and radial direction. As a result, the substrate having the organic layer which had concave portions formed in the surface thereof was obtained.

The obtained substrate having the organic layer having the concave portions formed in the surface thereof was measured by means of AFM, the depth of the concave portion was 200 nm, and the minimum distance (the pitch) between the center points of the adjacent concave portions was 1 μm. Moreover, the slanted angle of the slanted side wall of the concave portion was 65 degrees.

FIG. 6 shows the electron microgram of the substrate having the organic layer having the concave portions formed in the surface thereof. Moreover, FIG. 7 is a projection view obtained by vertically projecting part of the concave portions in the substrate having the organic layer of FIG. 6 to a horizontal plane. From FIG. 7, it was found that the outer diameter of the concave portion was 0.8 μm, the inner diameter of the slanted side walls was 0.5 μm, and the projected area A obtained by vertically projecting the slanted side wall of the concave portion to the horizontal plane was $(0.4\times0.4-0.25\times0.25) \times n = 0.31\ \mu m^2$. Moreover, the projected area B obtained by vertically projecting the entire concave portion to a horizontal plane was $0.4 \times 0.4 \times \pi = 0.5\ \mu m^2$. Therefore, the ratio [(A/B) × 100] of the projected area A, which had been obtained by vertically projecting the slanted side wall of the concave portion to a horizontal plane, to the projected area B, which had been obtained by vertically projecting the entire concave portion to a horizontal plane, was 62%.

Next, vacuum deposition was performed by using aluminum as a conductive material and directing the side of the substrate where the concave portions had been formed to the vacuum deposition device, to thereby form a conductive layer formed of aluminum and having a thickness of 10 nm on the surface of the convex-concave portion. In the manner mentioned above, the heat-ray reflective structure of Example 1 was prepared.

(Examples 2 to 9, and Comparative Examples 1 to 5)

Heat-ray reflective structures of Examples 2 to 9 and Comparative Examples 1 to 5 were prepared in the same manner as Example 1, provided that the thickness of the conductive layer, the pitch between the concave portions, the slanted angle of the slanted side wall of the concave portion, the ratio[(A/B) × 100] of the projected area A obtained by vertically projecting the slanted side wall of the concave portion to a horizontal plane to the projected area B obtained by vertically projecting the entire concave portion to a horizontal plane, and the depth of the concave portion was changed as shown in Tables 1-1 and 1-2.

Note that the depth of the concave portion was controlled by changing the concentration of the oxonol organic material in contained in the organic layer. For the concave portion having the depth of 100 nm (Example 6), the concentration of the oxonol organic material was adjusted to 24 mg/mL. For the concave portion having the depth of 50 nm (Example 7), the concentration of the oxonol organic material was adjusted to 15 mg/mL. For the concave portion having

the depth of 1,200 nm (Comparative Example 3), it was attempted to adjust the concentration of the oxonol organic material to 200 mg/mL or more, but the oxonol organic material did not dissolve (could not produce the heat-ray reflective structure).

Next, the heat-ray reflective structures of Examples 1 to 9, and Comparative Examples 1 to 5 were subjected to the measurements of the transmittance of the visible light, the transmissivity of the electric wave, and the transmittance of the heat-ray, in the following manners. The results are shown in Tables 1-1 and 1-2.

<Transmittance of Visible Light>

The transmittance of the visible light was measured at the wavelength of 550 nm by means of USB2000 manufactured by Ocean Optics Inc.

<Transmissivity of Electric Wave>

The transmissivity of the electric wave was evaluated at about 2 GHz, by surrounding a cellular phone by the prepared heat-ray reflective structure, and the condition for the reception was judged with five grades of 1 to 5. The larger number shows better reception, 1 is the lower limit which allows the telephone conversation, and 5 is approximately five times of 1, in terms of the radio field intensity.

<Evaluation by Visual Observation>

The presence of lines due to the convex-concave portion was confirmed by the visual observation, and evaluated with the following criteria.

[Evaluation Criteria]

A: No lines are shown at all and clearness is high
B: No lines are shown and clearness is observed
C: Lines are slightly shown
D: Lines are shown

<Transmittance of Heat Ray>

The transmittance of light having the wavelength of 1 μm to 2 μm was measured by means of USB2000 manufactured by Ocean Optics Inc.

Table 1-1

| | Conductive Material | Thickness of conductive layer (nm) | Slanted angle | Ratio of slanted plane |
|---|---|---|---|---|
| Ex. 1 | Aluminum | 10 | 65° | 62% |
| Ex. 2 | Aluminum | 20 | 65° | 62% |
| Ex. 3 | Aluminum | 50 | 65° | 62% |
| Ex. 4 | Aluminum | 10 | 65° | 28% |
| Ex. 5 | Aluminum | 10 | 65° | 22% |
| Ex. 6 | Aluminum | 10 | 65° | 62% |
| Ex. 7 | Aluminum | 20 | 65° | 62% |
| Ex. 8 | Aluminum | 150 | 65° | 62% |
| Ex. 9 | Aluminum | 0.1 | 65° | 62% |
| Comp. Ex. 1 | Aluminum | 1,200 | 65° | 62% |
| Comp. Ex. 2 | Aluminum | 10 | 65° | 4% |

(continued)

| | Conductive Material | Thickness of conductive layer (nm) | Slanted angle | Ratio of slanted plane |
|---|---|---|---|---|
| Comp. Ex. 3 | Aluminum | Incapable of preparing | | |
| Comp. Ex. 4 | Aluminum | 0 | 65° | 0% |
| Comp. Ex. 5 | Aluminum | 20 | 65° | 16% |

Table 1-2

| | Pitch between concaves (μm) | Depth of concave (nm) | Transmittance of visible light | Transmissivity of electric wave | Visual observation | Transmittance of heat ray |
|---|---|---|---|---|---|---|
| Ex. 1 | 1 | 200 | 80% | 4 | A | 60% |
| Ex. 2 | 1 | 200 | 60% | 4 | A | 45% |
| Ex. 3 | 1 | 200 | 10% | 3 | A | 7% |
| Ex. 4 | 4 | 200 | 72% | 4 | A | 60% |
| Ex. 5 | 7 | 200 | 70% | 4 | B | 60% |
| Ex. 6 | 1 | 100 | 82% | 4 | A | 60% |
| Ex. 7 | 1 | 50 | 62% | 3 | A | 45% |
| Ex. 8 | 1 | 200 | 0% | 2 | B | 0% |
| Ex. 9 | 1 | 200 | 90% | 4 | A | 80% |
| Comp. Ex. 1 | 1 | 200 | 0% | 0 | B | 0% |
| Comp. Ex. 2 | 20 | 200 | 80% | 4 | D | 60% |
| Comp. Ex. 3 | | Incapable of preparing | | | | |
| Comp. Ex. 4 | 0 | 0 | 90% | 4 | A | 80% |
| Comp. Ex. 5 | 1 | 200 | 50% | 4 | A | 45% |

Note that, in Table 1-1, the ratio of the slanted plane means a ratio [(A/B) $\times$ 100] of the projected area A obtained by vertically projecting the slanted side wall of the concave portion to a horizontal plane to the projected area B obtained by vertically projecting the entire concave portion to a horizontal plane. Moreover, Comparative Example 4 did not function as a heat-ray reflective structure due to the design thereof. Comparative Example 5 had the number of the concave portion which was 1/4 of that of Example 1.

(Example 10)

-Nanoimprinting Method-

A substrate in a surface of which a convex-concave portion had been formed was obtained in the same manner as Example 1, provided that the glass substrate was replaced to a silicon substrate.

Thereafter, using the organic layer in which the convex-concave portion had been formed as a mask, dry-etching was performed on the silicon substrate, to thereby form concave portions each having a depth of 200 nm on the silicon substrate. Note that, as for the conditions of the dry-etching, reactive ion etching (RIE) was performed with gas of $SF_6$, and at an output of 150 W. As has been mentioned above, an imprint mold was prepared.

Next, onto a glass substrate, SD640 (manufactured by DIC Corporation) was applied and then UV cured to thereby form an imprint layer having a thickness of 10 μm.

The above-prepared imprint mold was pressed against the imprint layer formed on the glass substrate to thereby transfer the convex-concave pattern of the imprint mold to the imprint layer, and then the imprint mold was released

from the imprint layer to thereby form a convex-concave portion on the glass substrate (nanoimprinting method).

Next, vacuum deposition was performed using aluminum as a conductive material and directing the side of the substrate where the concave portions had been formed to the vacuum deposition device, to thereby form a conductive layer formed of aluminum and having a thickness of 10 nm on the surface of the convex-concave portion. In the manner mentioned above, the heat-ray reflective structure of Example 10 was prepared.

With regard to obtained heat-ray reflective structure of Example 10, the depth of the concave portion was 200 nm, and the minimum distance (the pitch) between the center points of the adjacent concave portions was 1 μm. The slanted angle formed by the slanted side wall of the concave portion was 65 degrees. Moreover, the ratio [(A/B) × 100] of the projected area A obtained by vertically projecting the slanted side wall of the concave portion to a horizontal plane to the projected area B obtained by vertically projecting the entire concave portion to a horizontal plane was 62%.

The heat-ray reflective structure of Example 10 was subjected to the measurements of the transmittance of the visible light, the transmissivity of the electric wave, and the transmittance of the heat ray in the same manner as in Example 1. The results were the same levels to those of Example 1.

The heat-ray reflective film and heat-ray reflective structure of the present invention can be widely used in various fields, such as window glass for various vehicles including automobiles, buses, tracks, trains, bullet trains, air crafts, passenger air crafts, and ships, and glass for construction materials such as openings and partitions of buildings including general detached houses, complex houses, office buildings, commercial buildings such as of shops, public buildings, and plants.

## Claims

1. A heat-ray reflective film, comprising:

   a convex-concave portion formed by arranging a plurality of concave portions in one surface of the heat-ray reflective film using the surface as a base plane; and
   a conductive layer formed on a surface of the convex-concave portion,
   wherein each of the concave portions has a depth of less than 1 μm, and the conductive layer has a thickness of 1 μm or less, and
   wherein the convex-concave portion contains a slanted side wall, and the heat-ray reflective film satisfies the relationship of:

$$(A/B) \times 100 \geq 20\%$$

   where A denotes a projected area obtained by vertically projecting the slanted side wall of the convex portion onto a horizontal plane, and B denotes a projected area obtained by vertically projecting the entire concave portion onto a horizontal plane.

2. The heat-ray reflective film according to claim 1, wherein a slanted direction of the slanted side wall of the concave portion and an arranging direction of the concave portion makes an angle of 30 degrees or more but less than 90 degrees.

3. The heat-ray reflective film according to any of claim 1 or 2, wherein the adjacent concave portions are arranged so that a minimum distance between center points thereof is less than 10 μm on average.

4. The heat-ray reflective film according to any one of claims 1 to 3, further comprising a smoothing layer disposed above the convex-concave portion with the conductive layer intervening between the smoothing layer and the convex-concave portion.

5. A heat-ray reflective structure, comprising:

   a base; and
   the heat-ray reflective film as defined in any one of claims 1 to 4, disposed on the base.

6. A method for producing a heat-ray reflective structure, comprising:

providing an organic layer, which is capable of changing a shape thereof with heat, on one surface of a base, and applying a condensed light to the organic layer so as to form a convex-concave portion having slanted side walls; and

forming a conductive layer on a surface of the convex-concave portion.

**7.** A method for producing a heat-ray reflective structure, comprising:

providing an imprint layer on one surface of a base, and pressing an imprint mold against the imprint layer in accordance with an imprinting method so as to form a convex-concave portion having slanted side walls; and

forming a conductive layer on a surface of the convex-concave portion.

**8.** The method for producing a heat-ray reflective structure according to claim 7, the imprint mold is formed by performing etching using, as a mask, an organic layer in which a convex-concave portion has been formed by applying a condensed light to the organic layer capable of changing a shape thereof with heat.

FIG. 1

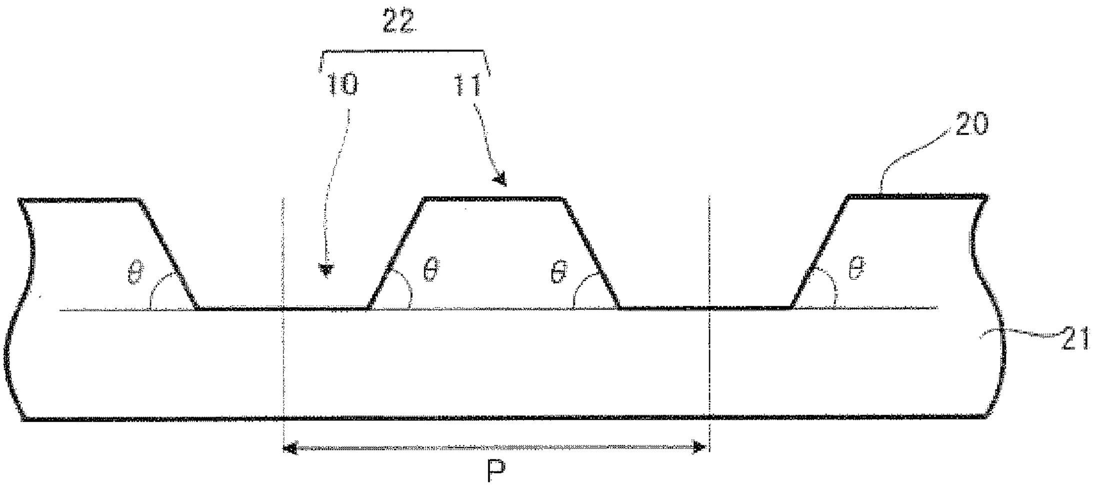


FIG. 2

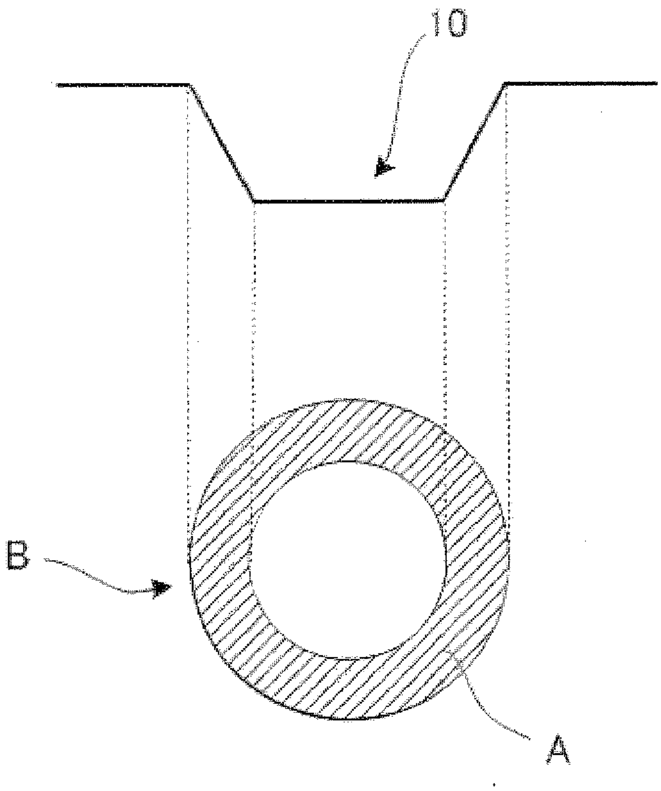

FIG. 3A

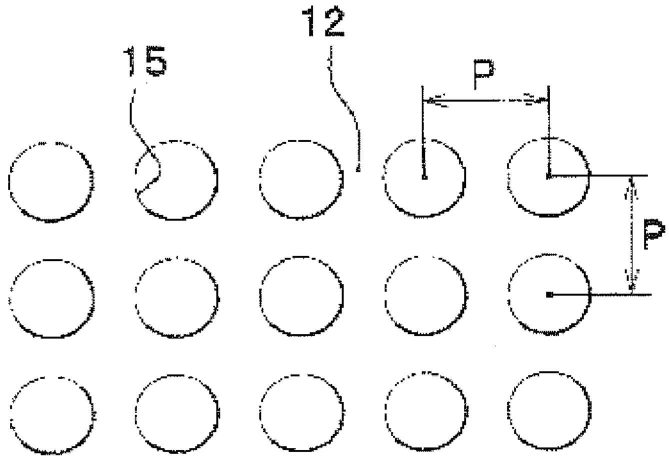


FIG. 3B

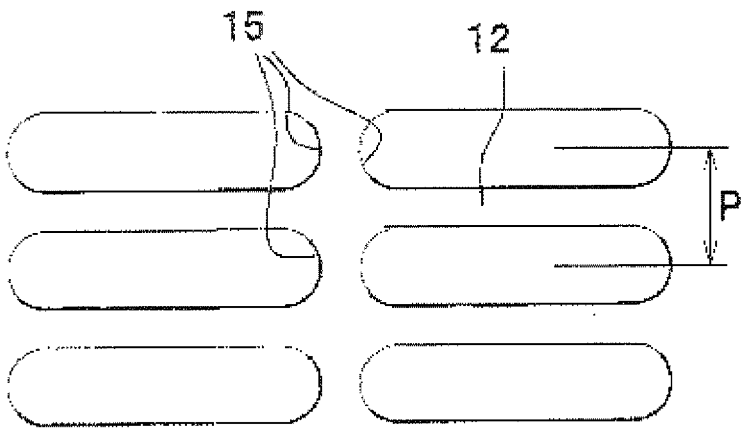

FIG. 3C

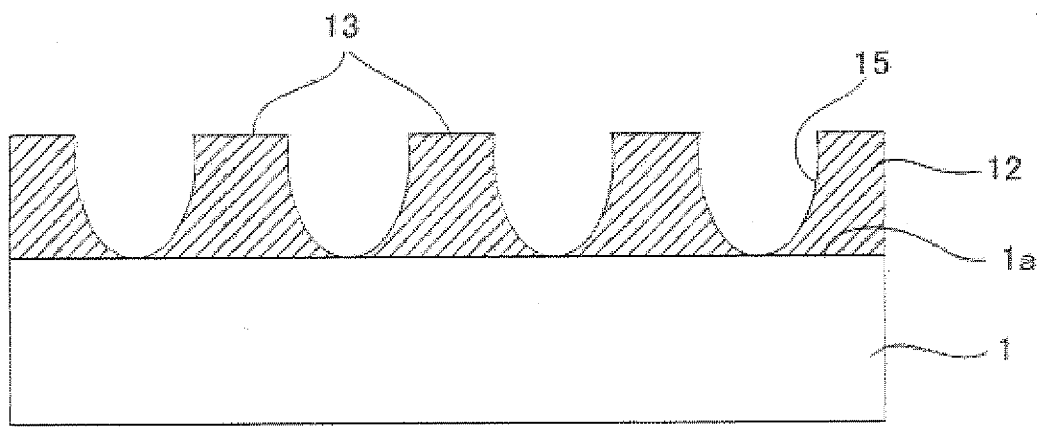

FIG. 4A

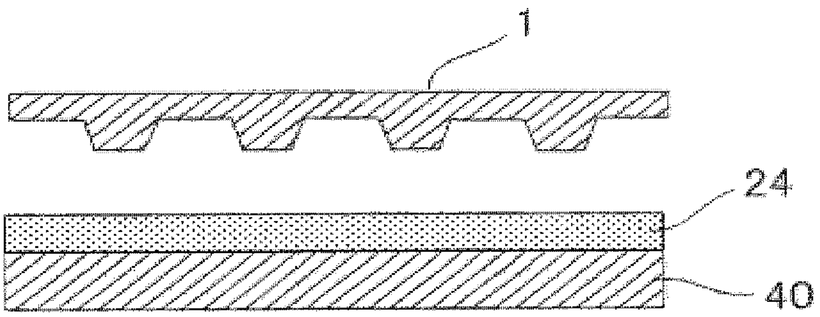


FIG. 4B

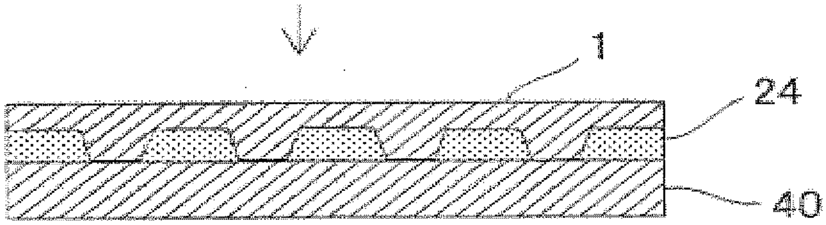


FIG. 4C

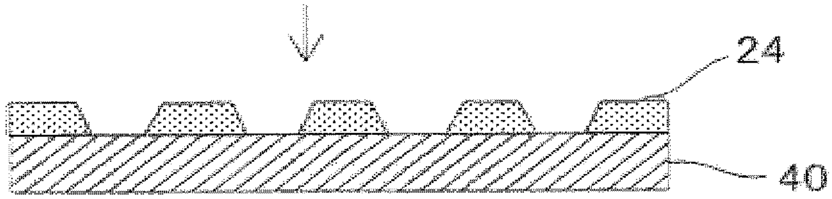

FIG. 5A

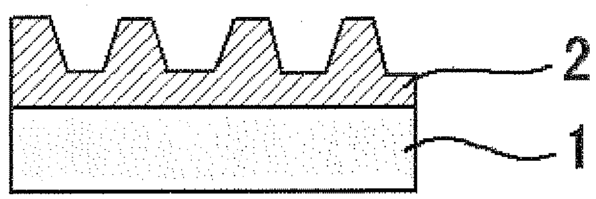


FIG. 5B

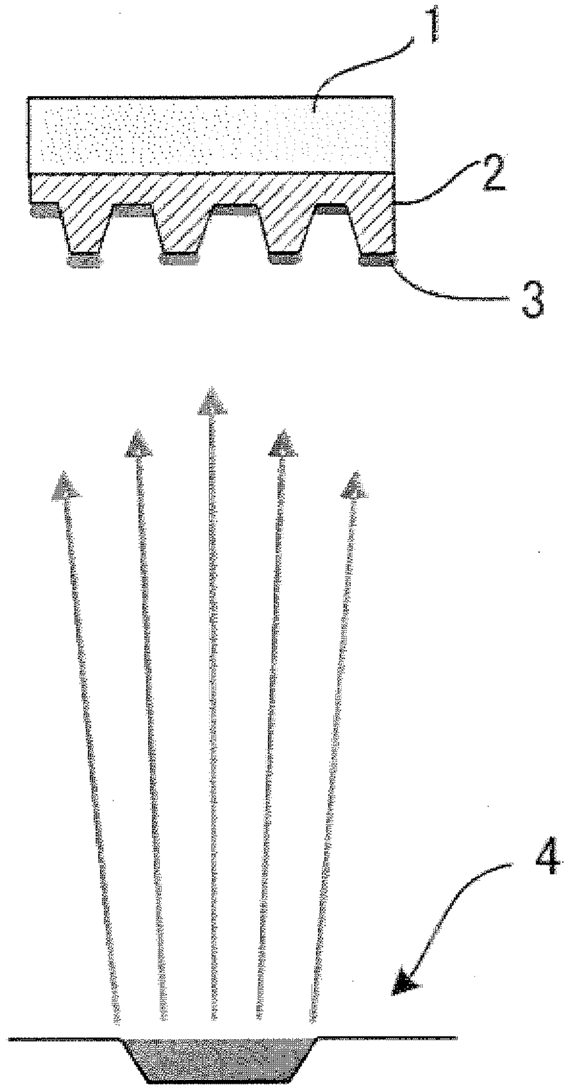

FIG. 5C

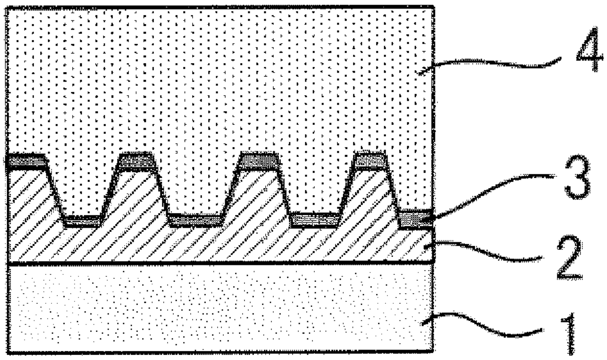


FIG. 6

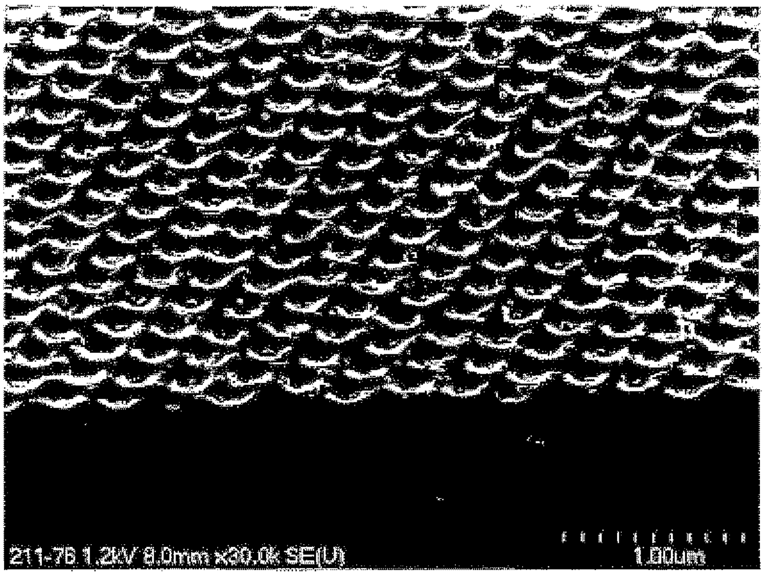

FIG. 7

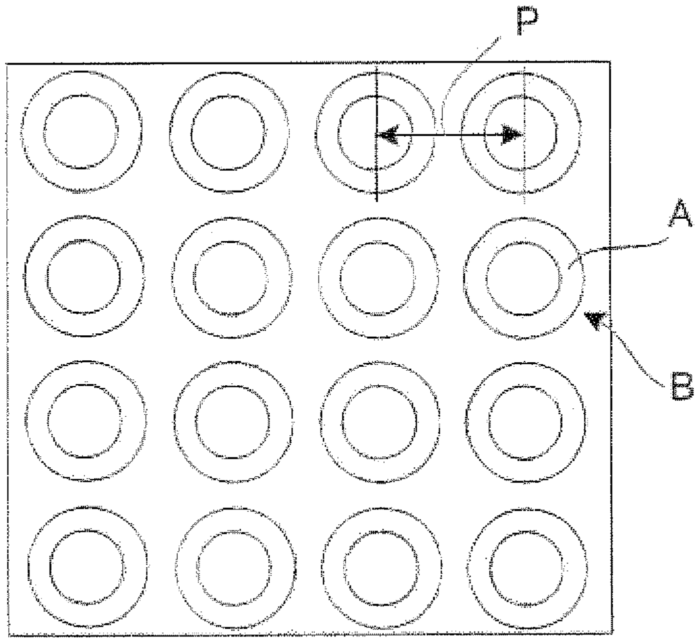

Europäisches Patentamt
European Patent Office
Office européen des brevets

# EUROPEAN SEARCH REPORT

Application Number
EP 10 15 2375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/123710 A1 (MATSUMOTO IKUO [JP] ET AL) 9 June 2005 (2005-06-09)<br>* paragraph [0056] - paragraph [0091]; figure 2 *<br>* paragraph [0110] - paragraph [0127]; table 1 * | 1-8 | INV.<br>G02B5/18<br>G11B7/258<br>G11B7/26<br><br>ADD.<br>C03C17/38 |
| X | JP 2001 126309 A (FUJI PHOTO FILM CO LTD) 11 May 2001 (2001-05-11)<br>* abstract * | 1-5 | |
| X | EP 1 256 947 A1 (TAIYO YUDEN KK [JP]) 13 November 2002 (2002-11-13)<br>* paragraph [0009] - paragraph [0014]; claims; figures * | 1,5 | |
| X | EP 0 114 154 A2 (DIAB BARRACUDA AB [SE]) 25 July 1984 (1984-07-25)<br>* page 2, line 24 - page 3, line 9 * | 1-4 | |
| A | DE 101 03 020 A1 (BASF AG [DE]) 25 July 2002 (2002-07-25)<br>* paragraph [0005] - paragraph [0015]; figures * | 1-4 | TECHNICAL FIELDS SEARCHED (IPC)<br>C03C<br>G02B<br>G11B<br>B32B<br>C08J |
| A,D | JP 2005 104793 A (NIPPON SHEET GLASS CO LTD) 21 April 2005 (2005-04-21)<br>* abstract * | 1-4 | |

The present search report has been drawn up for all claims

2

| Place of search | Date of completion of the search | Examiner |
|---|---|---|
| Munich | 26 May 2010 | Lindner, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 2375

This annex lists the patent family members relating to the patent documents cited in the above-mentioned European search report. The members are as contained in the European Patent Office EDP file on The European Patent Office is in no way liable for these particulars which are merely given for the purpose of information.

26-05-2010

| Patent document cited in search report | | Publication date | Patent family member(s) | | | Publication date |
|---|---|---|---|---|---|---|
| US 2005123710 | A1 | 09-06-2005 | CN | 1627404 | A | 15-06-2005 |
| JP 2001126309 | A | 11-05-2001 | NONE | | | |
| EP 1256947 | A1 | 13-11-2002 | AU | 3227701 | A | 20-08-2001 |
| | | | AU | 3227801 | A | 20-08-2001 |
| | | | AU | 3227901 | A | 20-08-2001 |
| | | | AU | 3228001 | A | 20-08-2001 |
| | | | EP | 1256946 | A1 | 13-11-2002 |
| | | | WO | 0159778 | A1 | 16-08-2001 |
| | | | WO | 0159779 | A1 | 16-08-2001 |
| | | | WO | 0159780 | A1 | 16-08-2001 |
| | | | WO | 0159773 | A1 | 16-08-2001 |
| | | | TW | 505915 | B | 11-10-2002 |
| | | | TW | 522377 | B | 01-03-2003 |
| | | | TW | 526474 | B | 01-04-2003 |
| | | | TW | 561469 | B | 11-11-2003 |
| | | | US | 2002150034 | A1 | 17-10-2002 |
| | | | US | 2002154595 | A1 | 24-10-2002 |
| | | | US | 2002150030 | A1 | 17-10-2002 |
| | | | US | 2003048734 | A1 | 13-03-2003 |
| EP 0114154 | A2 | 25-07-1984 | AU | 569273 | B2 | 28-01-1988 |
| | | | AU | 2327884 | A | 19-07-1984 |
| | | | BE | 898680 | A1 | 13-07-1984 |
| | | | CA | 1214245 | A1 | 18-11-1986 |
| | | | CH | 661791 | A5 | 14-08-1987 |
| | | | DE | 3474342 | D1 | 03-11-1988 |
| | | | DK | 15984 | A | 15-07-1984 |
| | | | ES | 8407203 | A1 | 16-11-1984 |
| | | | FI | 840049 | A | 15-07-1984 |
| | | | FR | 2539501 | A1 | 20-07-1984 |
| | | | GB | 2133344 | A | 25-07-1984 |
| | | | IL | 70547 | A | 30-10-1987 |
| | | | IN | 159732 | A1 | 06-06-1987 |
| | | | IT | 1172965 | B | 18-06-1987 |
| | | | JP | 1776285 | C | 28-07-1993 |
| | | | JP | 4065320 | B | 19-10-1992 |
| | | | JP | 59139957 | A | 11-08-1984 |
| | | | MY | 10087 | A | 31-12-1987 |
| | | | NO | 840128 | A | 16-07-1984 |
| | | | NZ | 206748 | A | 30-10-1987 |
| | | | SE | 444979 | B | 20-05-1986 |
| | | | SE | 8300174 | A | 15-07-1984 |
| | | | SG | 68086 | G | 27-02-1987 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 10 15 2375

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2010

| Patent document cited in search report | | Publication date | Patent family member(s) | Publication date |
|---|---|---|---|---|
| DE 10103020 | A1 | 25-07-2002 | NONE | |
| JP 2005104793 | A | 21-04-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005104793 A
- JP 2008252056 A
- JP 4074690 A
- JP 8127174 A
- JP 11053758 A
- JP 11334204 A
- JP 11334205 A
- JP 11334206 A
- JP 11334207 A
- JP 2000043423 A
- JP 2000108513 A
- JP 2000158818 A
- JP 58175693 A
- JP 59081194 A
- JP 60018387 A
- JP 60019586 A
- JP 60019587 A
- JP 60035054 A
- JP 60036190 A
- JP 60036191 A
- JP 60044554 A
- JP 60044555 A
- JP 60044389 A
- JP 60044390 A
- JP 60054892 A
- JP 60047069 A
- JP 63209995 A
- JP 4025492 A
- JP 1038680 B
- JP 6026028 B
- DE 350399
- JP 3096239 B